# EUROPEAN PATENT APPLICATION

(11) **EP 2 783 965 A1**
(43) Date of publication of application: **01.10.2014**
(21) Application number: 14164810.5
(22) Date of filing: 30.09.2010
(51) Int. Cl.: B62K 11/10

(54) **Electric motorcycle**

(30) Priority: 30.09.2009 JP 2009229053; 25.12.2009 JP 2009294090
(62) Divisional of application: 10183905.8
(71) Applicant: Yamaha Hatsudoki Kabushiki Kaisha, Iwata-shi, Shizuoka-ken 438 (JP)
(72) Inventor: NISHIYAMA, Motokuni, Shizuoka-ken, 438-8501 (JP); YAZAKI, Masato, Shizuoka-ken, 438-8501 (JP); TERADA, Junji, Shizuoka-ken, 438-8501 (JP)
(74) Representative: Zimmermann, Tankred Klaus

(57) **Abstract**

An electric motorcycle (10) comprises a motorcycle body frame (12) including a rear frame (18), a seat (98) supported by the rear frame (18), for a rider to sit on, a foot rest (32) disposed at a more forward and lower position than part of the seat (98) and supported by the motorcycle body frame (12), a rear arm (34) having a fore end portion connected with the motorcycle body frame (18), an electric motor (36) provided in the rear arm (34), a rear wheel (38) supported at a rear end portion of the rear arm (34) and driven by the electric motor (36), a battery (18) for supplying electric power to the electric motor (36), an electric charger (74) disposed below the seat (98), above the rear wheel (38) for charging the battery (68), and a charging cord (106) connected with the electric charger (74) and stored between the seat (98) and the electric charger (74). The battery (68) is disposed at a rearward tilt, the electric charger (74) having its fore end (F) located at a lower position than an upper end (C1) of the battery (68), the electric charger (74) being disposed at a forward tilt.

## Description

### BACKGROUND OF THE INVENTION

### Field of the Invention

The present invention relates to electric motorcycles, and more specifically to an electric motorcycle including a battery and an electric charger.

### Description of the Related Art

Conventional art of this kind is disclosed in WO2004/069638 for example.

WO2004/069638 discloses an electric motorcycle, which includes a left-and-right pair of down tubes, and a left-and-right pair of rear frames connected with the left-and-right pair of down tubes. With this arrangement, a battery is disposed between the left-and-right pair of rear frames, with appropriate bank angle clearance and consideration to water submersion risk of the battery. A bracket is hung from the left-and-right pair of rear frames, and an electric charger is disposed on this bracket.

### SUMMARY OF THE INVENTION

A primary object of the present invention is to provide an electric motorcycle which has reduced vibration transmission to the electric charger.

According to an aspect of the present invention, there is provided an electric motorcycle which includes a motorcycle body frame having a rear frame; a seat supported by the rear frame, for a rider to sit on; a foot rest disposed at a more forward and lower position than part of the seat and supported by the motorcycle body frame; a rear arm having a fore end portion connected with the motorcycle body frame; an electric motor provided in the rear arm; a rear wheel supported at a rear end portion of the rear arm and driven by the electric motor; a battery for supplying electric power to the electric motor; and an electric charger disposed below the seat, above the rear wheel for charging the battery. With the above arrangement, the rear frame includes a left-and-right pair of first frame portions extending in an obliquely upward and rearward direction from a more rearward position than the foot rest; a left-and-right pair of second frame portions connected with the pair of first frame portions at a lower position than the electric charger and extending rearward below the electric charger; an electric charger supporting portion provided in the second frame portions and supporting the electric charger; a first seat supporting portion supporting a fore portion of the seat; and a second seat supporting portion disposed at a more rearward position than the first seat supporting portion, connecting the pair of second frame portions with each other and supporting the seat. Further, the battery is provided between the pair of first frame portions so as to overlap connecting spots of the first frame portions and the second frame portions in a side view. At least part of the second seat supporting portion is located at a more forward position than the electric charger supporting portion.

In the present invention, the first frame portions are shorter than in conventional arrangements, and the connecting spots of the first frame portions and the second frame portions are located at a lower position than the electric charger and overlap the battery in a side view. Also, the second frame portions are shorter than in conventional arrangements and extend below the electric charger in a rearward direction. The arrangement makes it possible to substantially shorten a length of the members (a route) from the connecting spot (an end portion) of the rear frame in the motorcycle body frame to the electric charger in comparison with conventional arrangements. Therefore, it is possible to reduce vibration which is transmitted from the connecting spots, via the rear frame, to the electric charger. Also, by connecting the pair of second frame portions with each other using the second seat supporting portion, the arrangement provides rigid support to the second frame portions, which also contributes to reduction of vibration to the electric charger. Further, it should be noted that connecting the second supporting portion to, e.g., a rear end of the second frame portion will obviously result in increased vibration of the second frame portion. Such a disadvantage is substantial since the second seat supporting portion receives the weight of the motorcycle rider. According to the present invention, disadvantageous load concentration on the rear end of the second frame portion is avoided by an arrangement that the second seat supporting portion connects the pair of second frame portions with each other so that at least part of the second seat supporting portion is located at a more forward position than the electric charger supporting portion. The arrangement reduces vibration of the second frame portions, thereby reducing vibration to the electric charger. As described, a combination of a plurality of structural characteristics, which includes a shortened rear frame; a rigidly supported pair of second frame portions; a well-considered selection of a mounting position for the second seat supporting portion; etc. leads to reduced vibration to the electric charger.

Preferably, the second seat supporting portion connects the pair of second frame portions with each other while straddling the electric charger. By connecting the second frame portions with each other in such a fashion that the second seat supporting portion straddles the electric charger, the arrangement ensures that the second seat supporting portion is not an obstacle in disposing the electric charger, allowing the electric charger to be disposed at a forward position. As a result, the electric charger supporting portion, which supports the electric charger, can also be at a forward position. The arrangement can shorten the second frame portions which are provided with the electric charger supporting portion. Therefore, it is possible to further shorten the length of the members (the route) from the connecting spots of the rear frame in the motorcycle body frame to the electric charger, and to further reduce vibration.which is transmitted to the electric charger.

Further preferably, the second seat supporting portion includes a pair of lower portions connected with the pair of second frame portions, and a pair of upper portions connected with the pair of lower portions and located between the pair of lower portions and the seat. Each of the upper portions is at least partially located on a more laterally inward side of the motorcycle than the lower portion to which said upper portion is connected. In cases where the electric motorcycle has a charging cord connected with the electric charger, the charging cord is laid on the outer sides of the upper portions of the second seat supporting portion, whereby the charging cord can be stored smoothly without flipping.

Further, preferably, the electric charger has a fore end located at a more forward position than a rear end of the battery. When the electric charger is disposed so that its fore end is located at a more forward position than the rear end of the battery, the rear end of the electric charger is located accordingly at a forward position. Therefore, the second frame portions which support the electric charger can be shortened for further reduction of vibration which is transmitted to the electric charger.

Preferably, the electric motorcycle further includes a connecting portion which connects the first seat supporting portion and the second seat supporting portion with each other. Connecting the first seat supporting portion and the second seat supporting portion with each other by the connecting portion provides a more rigid support to the second seat supporting portion and also to the second frame portions. This leads to further reduction in vibration transmitted to the electric charger.

Further preferably, the electric motorcycle further includes a charging cord which is connected with the electric charger and stored between the seat and the electric charger. In this case, it is possible to provide a large storage space for the charging cord. The space can easily accommodate a long charging cord. This provides increased convenience for the motorcycle rider to perform battery charging operations. Also, the arrangement allows the charging cord to be stored at a small curvature, which extends life of the charging cord.

Further, preferably, the battery is disposed at a rearward tilt; the electric charger has its fore end located at a lower position than an upper end of the battery; and the electric charger is disposed at a forward tilt. In this case, it is possible to provide a large storage space for the charging cord between the electric charger and the seat.

The electric motorcycle is subject to vibration due to uneven surface of the road for example. The magnitude of vibration transmitted to the electric charger depends on a length from a connecting spot of the down tube and the rear frame, through the rear frame and the bracket, to the electric charger. In WO2004/069638, there is a large length from the connecting spot of the down tube and the rear frame, through the rear frame and the bracket, to the electric charger. This means that the electric charger is subject to a large magnitude of vibration, which is not desirable for the electric charger. According to the invention, this length may be reduced and, therefore, the magnitude of vibration transmitted to the electrical charger may be reduced.

The above-described object and other objects, characteristics, aspects and advantages of the present invention will become clearer from the following detailed description of embodiments of the present invention to be made with reference to the attached drawings.

### BRIEF DESCRIPTION OF THE DRAWINGS

Fig. 1 is a left side view of an electric motorcycle according to an embodiment of the present invention.
Fig. 2 is a perspective view, showing an example of rear frame.
Fig. 3 is a perspective view, showing an example of electric charger supporting portion which connects a pair of second frame portions with each other, and a region surrounding the electric charger supporting portion.
Fig. 4 is a perspective view, showing a rear frame, a battery and an electric charger as examples.
Fig. 5 is an explanatory side view, showing the rear frame, the battery, the electric charger and an example of seat.
Fig. 6 is a perspective view, showing an example of the electric charger mounted to the electric charger supporting portion.
Fig. 7 is an explanatory sectional view, showing a section taken in lines A-A in Fig. 3.
Fig. 8 is an explanatory drawing, showing an example of internal structure of the electric charger.
Fig. 9 is a perspective view, showing an example of an electric cord storage tray, with a charger cord stored therein.
Fig. 10 is a plan view, showing the electric cord storage tray, with the charger cord stored therein, as an example.
Fig. 11 is a perspective view, showing an electric cord storage tray, a rear upper cover and a rear lower cover as examples.
Fig. 12 is a perspective view, showing an example of heat dissipation opening provided in a rear lower cover.
Fig. 13 is an explanatory sectional view for describing the heat dissipation openings provided in the rear lower cover.
Fig. 14 is an explanatory drawing, showing a battery main body and a service plug of a battery as examples.
Fig. 15 is a perspective view, showing an electric cord storage tray and a plug cover as examples.
Fig. 16 is a plan view, showing the electric cord storage tray, with the plug cover removed, as an example.
Fig. 17 is a perspective view, showing the electric cord storage tray, with the plug cover attached.
Fig. 18 is a perspective view, showing the electric cord storage tray, with the plug cover removed.
Fig. 19 is a perspective view, showing the electric cord storage tray and an example of battery main body, with the plug cover and the service plug removed.

### DETAILED DESCRIPTION OF THE PREFERRED EMBODIMENTS

Hereinafter, embodiments of the present invention will be described with reference to the drawings.

It is noted that the terms right and left, front and rear, up and down as used in embodiments of the present invention are determined from the rider's position on a seat 98 of an electric motorcycle 10, with the rider facing toward a handlebar 24.

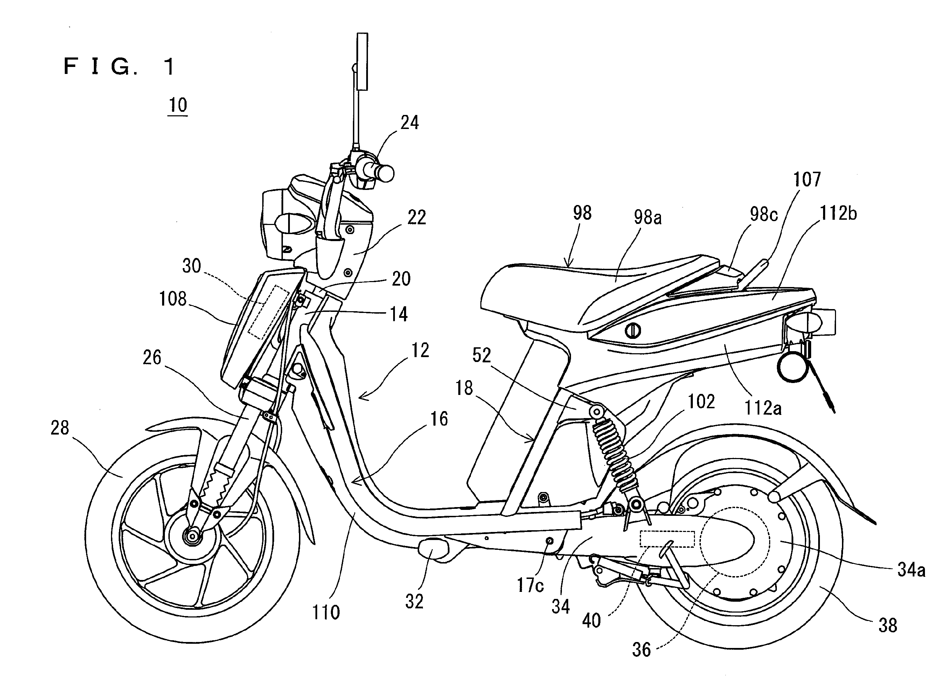

Referring to Fig. 1, an electric motorcycle 10 according to an embodiment of the present invention includes a motorcycle body frame 12. The motorcycle body frame 12 has a head pipe 14; a front frame 16 extending from the head pipe 14 in an obliquely rearward and downward direction; and a rear frame 18 connected with a rear portion of the front frame 16 and erected in an obliquely rearward and upward direction.

A steering shaft 20 is pivotably inserted through the head pipe 14. The steering shaft 20 has an upper end mounted with a handlebar supporting portion 22. A handlebar 24 is fixed to the handlebar supporting portion 22. The steering shaft 20 has a lower end mounted with a front fork 26. A front wheel 28 is rotatably mounted to lower ends of the front fork 26. In front of the head pipe 14, a DC-DC converter 30 is provided in order to convert an output voltage from a battery 68 (to be described later) to a lower voltage (from 48 V to 12 V in this embodiment) for power supply to the motorcycle's system components.

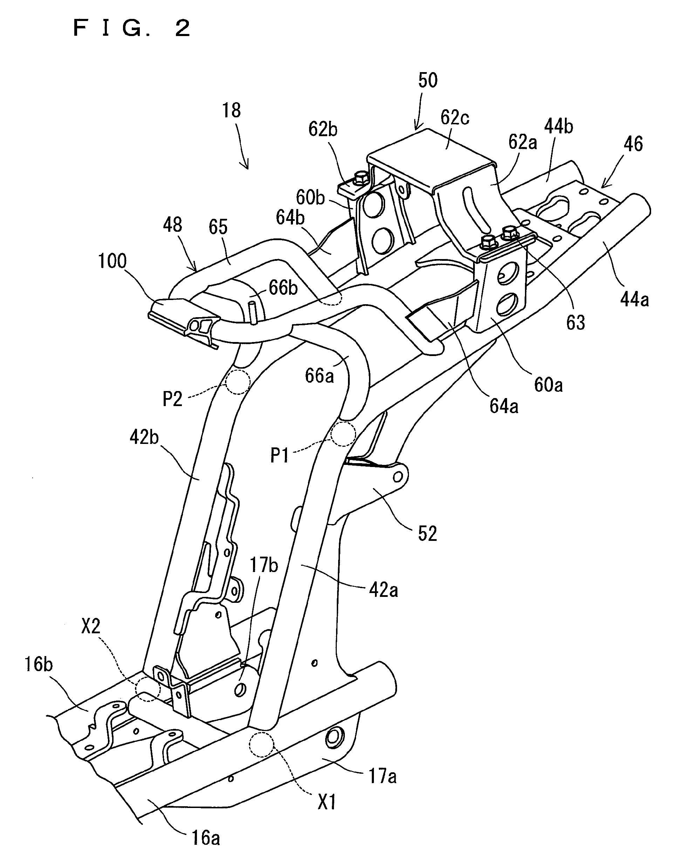

The front frame 16 includes a left-and-right pair of down tubes 16a, 16b (see Fig. 2). Each of the down tubes 16a, 16b in the pair extends in an obliquely rearward and downward direction, and then curves to extend rearward, providing a generally V-shaped structure. At a position near a region where the pair of down tubes 16a, 16b make a curve, a pair of foot rests 32 is provided. The pair of down tubes 16a, 16b have rear end portions provided with brackets 17a, 17b respectively. The brackets 17a, 17b supports a front end portion of a rear arm 34 via a pivot shaft 17c so that the rear arm 34 is pivotable. The rear arm 34 has a rear end portion 34a, which incorporates an electric motor 36 of an axial gap type for example. The electric motor 36 is connected with a rear wheel 38 for driving thereby rotating the rear wheel 38. The rear arm 34 incorporates a drive unit 40. The drive unit 40 is electrically connected with the electric motor 36 and controls the rotating drive of the electric motor 36.

Referring to Fig. 2, the rear frame 18 includes a left-and-right pair of first frame portions 42a, 42b; a left-and-right pair of second frame portions 44a, 44b; an electric charger supporting portion 46; a first seat supporting portion 48; a second seat supporting portion 50; and a suspension mounting portion 52.

The pair of first frame portions 42a, 42b are connected with the pair of down tubes 16a, 16b, at respective positions which are more rearward than the foot rests 32, and then extend in an obliquely rearward and upward direction. The pair of second frame portions 44a, 44b extend from the pair of first frame portions 42a, 42b, in an obliquely rearward and upward direction, at a smaller angle than the first frame portions 42a, 42b with respect to the horizontal direction. In the present embodiment, the first frame portion 42a and the second frame portion 44a are made as a single piece by curving a frame into a generally V-shaped look, so a center region of the curved portion represents a connecting spot P1 of the first frame portion 42a and the second frame portion 44a. Likewise, the first frame portion 42b and the second frame portion 44b are made as a single piece by curving a frame into a generally V-shaped look, so a center region of the curved portion represents a connecting spot P2 of the first frame portion 42b and the second frame portion 44b.

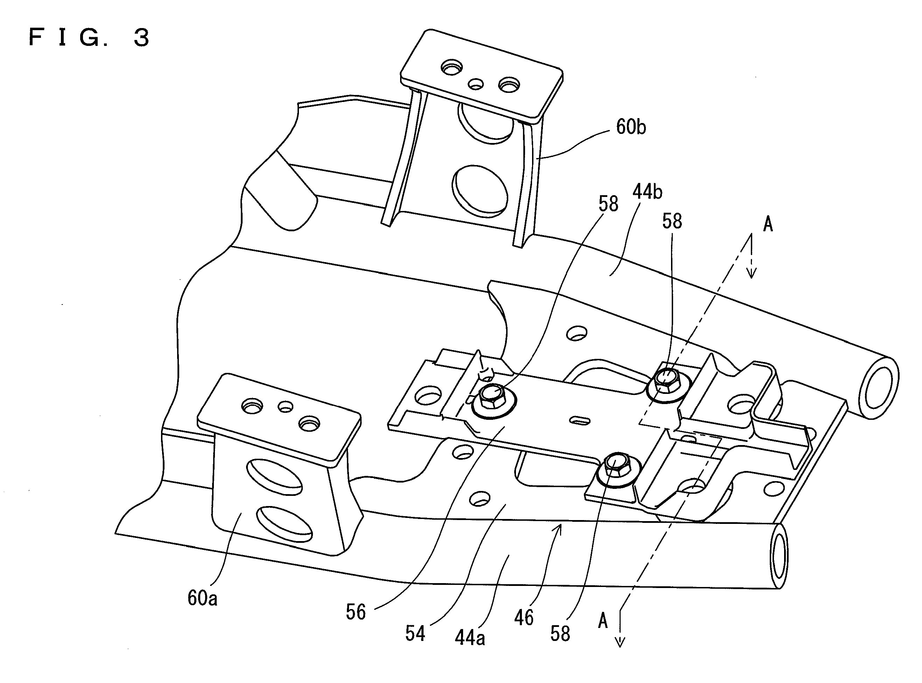

Referring also to Fig. 3, the electric charger supporting portion 46 is a platy portion which provides rectilinear connection between the pair of second frame portions 44a, 44b. The electric charger supporting portion 46 includes a platy connecting portion 54 which connects rear end portions of the second frame portions 44a, 44b with each other; and an insulation plate 56 attached onto the connecting portion 54. The connecting portion 54 and the insulation plate 56 are fastened to each other by a plurality (three in this embodiment) of fasteners 58 such as bolts.

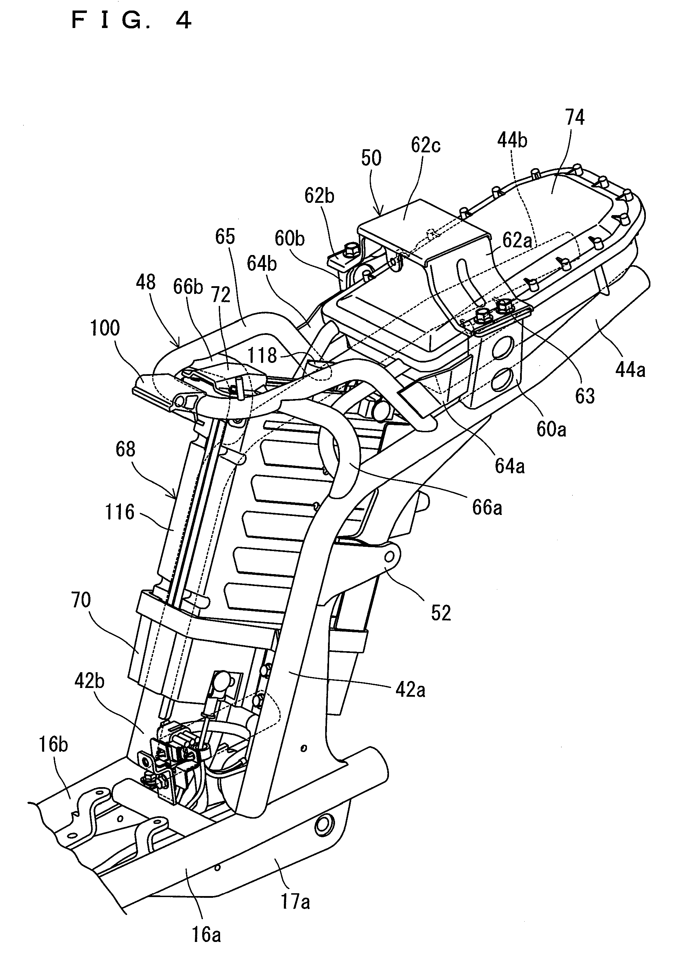

Referring to Fig. 2 and Fig. 4, the second seat supporting portion 50 is at a more rearward position than the first seat supporting portion 48, connects the second frame portions 44a, 44b with each other while straddling an electric charger 74 (to be described later) mounted on the electric charger supporting portion 46, and supports the seat 98. The second seat supporting portion 50 includes a pair of lower portions 60a, 60b erected at respective positions near a fore region of the electric charger supporting portion 46, which are also substantially central region in the pair of second frame portions 44a, 44b; a pair of upper portions 62a, 62b connected with the pair of lower portions 60a, 60b; and a platy connecting portion 62c which connects the pair of upper portions 62a, 62b with each other and supports the seat 98. The pair of lower portions 60a, 60b and the pair of upper portions 62a, 62b are fastened to each other with bolts 63. The pair of upper portions 62a, 62b increasingly come closer to each other at their higher positions. The pair of upper portions 62a, 62b and the connecting portion 62c form a generally pi- (n-) shaped structure.

The first seat supporting portion 48 includes a pipe 65, which has a generally U-shaped look in a plan view, connects the pair of second frame portions 44a, 44b with each other ahead of the second seat supporting portion 50, and projects in the forward direction; and a connecting portion 100 (to be described later), which is provided at a fore end portion of the pipe 65 and supports a front portion of the seat 98. The pipe 65 has two ends, which are connected with the lower portions 60a, 60b of the second seat supporting portion 50 by connecting portions 64a, 64b respectively. Also, support pipes 66a, 66b connect the pipe 65 to a vicinity of the connecting spot P1 of the first frame portion 42a and the second frame portion 44a, and to a vicinity of the connecting spot P2 of the first frame portion 42b and the second frame portion 44b. The suspension mounting portion 52 is in a vicinity of an upper end portion (the connecting spot P1) of the left-side first frame portion 42a.

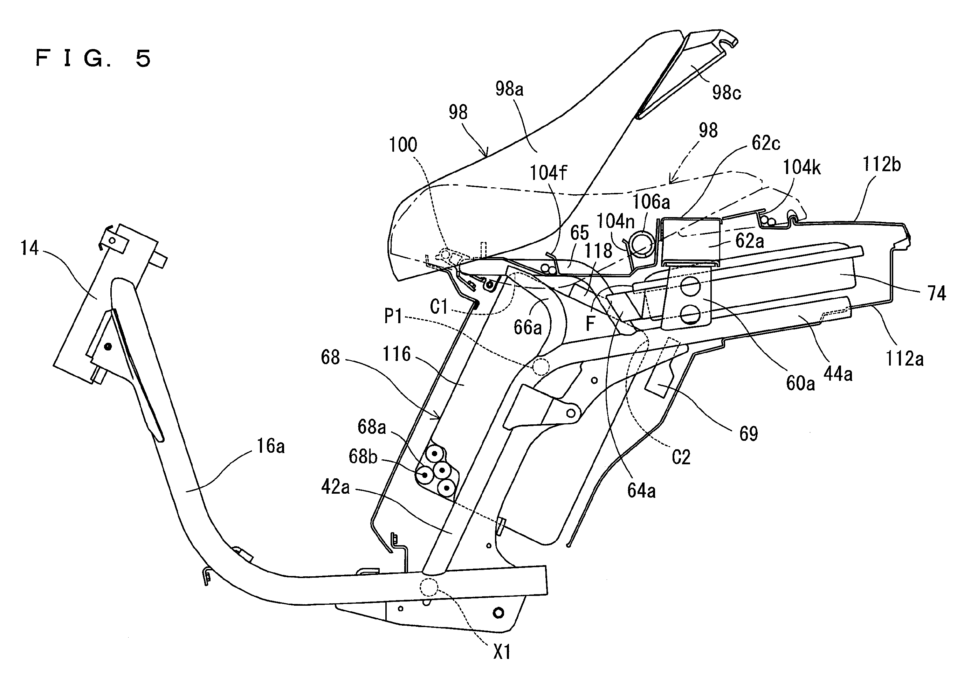

Referring to Fig. 4 and Fig. 5, between the pair of first frame portions 42a, 42b of the rear frame 18 described so far, a battery 68 is provided which supplies electric power to the electric motor 36 and to the DC-DC converter 30. At a slightly lower position than a longitudinal center region of the first frame portions 42a, 42b between the pair of first frame portions 42a, 42b, a battery holder 70 is provided. At a fore end region of the first seat supporting portion 48, a rearward-facing hold-down portion 72 is provided. The battery 68 is supported by the battery holder 70. The battery 68 has an upper surface held down by the hold-down portion 72. With the arrangement described above, the battery 68 overlaps, in a side view, the connecting spot P1 (P2) of the first frame portion 42a (42b) and the second frame portion 44a (44b). Also, the battery 68 is tilted rearward so that its upper front corner portion C1 is higher than its upper rear corner portion C2. The battery 68 includes a plurality of cells 68a provided by lithium ion cells for example. Each cell 68a is disposed so that its longitudinal axis 68b lies in the motorcycle's width direction (left-right direction). The arrangement can prevent the motorcycle from having an excessively large length compared to arrangements where each cell 68a is disposed so that its longitudinal axis 68b lies in the motorcycle's fore-aft direction, even in cases where the battery is of an increased capacity.

Behind the battery 68, a BMC (Battery Management Controller) 69 is provided. The BMC 69 is electrically connected with the drive unit 40, the battery 68 and the electric charger 74.

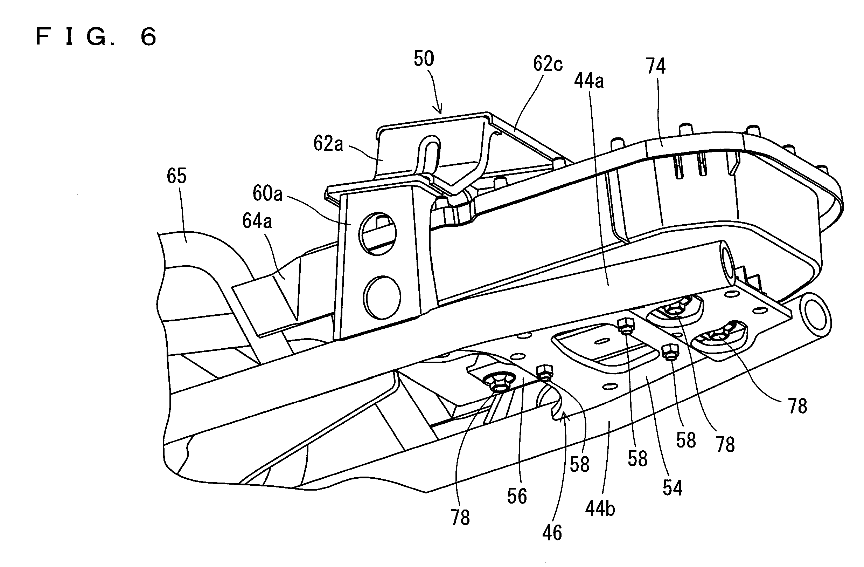

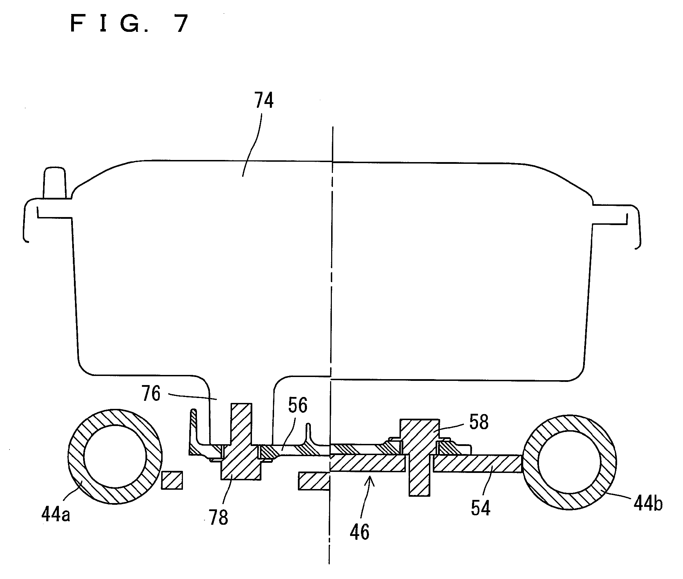

Referring also to Fig. 6 and Fig. 7, the electric charger 74 is mounted on the insulation plate 56 of the electric charger supporting portion 46, for charging the battery 68. The electric charger 74 is disposed so that it partially lies beneath the second seat supporting portion 50. The electric charger 74 has a bottom surface formed with a plurality (three in the present embodiment) of projected portions 76 provided by generally prismatic bodies for example. Each projected portion 76 is connected with the insulation plate 56 by a fastener 78 such as a bolt. As described above, the electric charger 74 is disposed at a position which is beneath the seat 98 and above the rear wheel 38. The electric charger 74 has its fore end F located at a more forward position than the rear end (corner portion C2) of the battery 68 (see Fig. 5). Also, in a side view, the electric charger 74 is located at a higher position than the second frame portions 44a, 44b. In other words, the disposition of the electric charger 74 above the second frame portions 44a, 44b is made possible by making the first frame portions 42a, 42b short enough and by making the connecting spots P1, P2 at a lower position than the electric charger 74 and than conventional arrangements. Further, the fore end F of the electric charger 74 is at a lower position than the upper end (corner portion C1) of the battery 68, and the electric charger 74 is disposed at a forward tilting angle (see Fig. 5).

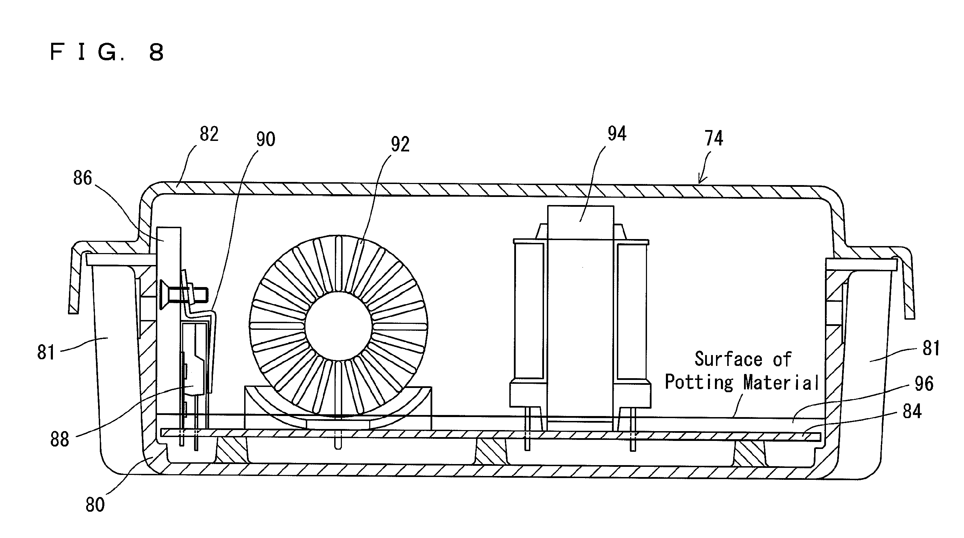

Referring to Fig. 8, the electric charger 74 includes an upwardly opening case 80 made of aluminum for example. The case 80 has a side surface formed with a plurality of heat dissipation fins 81. A lid 82 which is made of resin for example, is attached to an upper surface of the case 80. The case 80 incorporates an IC substrate 84. A heat dissipation plate 86 contacting to an inner wall of the case 80 is attached to the IC substrate 84, and a transistor 88 is provided in contact with the heat dissipation plate 86. The transistor 88 is urged onto the heat dissipation plate 86 by an urge member 90. Also, the IC substrate 84 has a coil 92, a transformer 94, etc. provided thereon. The IC substrate 84 is potted in a potting agent 96 which is poured into the case 80 to a level just enough to cover the IC substrate 84.

By pouring the potting agent 96 as described to a level enough to cover the IC substrate 84 which is susceptible to vibrations, the arrangement can reduce the amount of use of the potting agent 96 and keep the electric charger 74 light while reducing unwanted influences from vibrations of the rear frame 18.

Also, by providing the heat dissipation plate 86 on an inner wall of the case 80, the arrangement can improve heat dissipating capability together with the heat dissipation openings 114 (to be described later) which are provided in the rear lower cover 112a. Moreover, by urging the transistor 88, which is a heat-generating component, onto the heat dissipation plate 86 with the urge member 90, the arrangement can further improve heat dissipating capability.

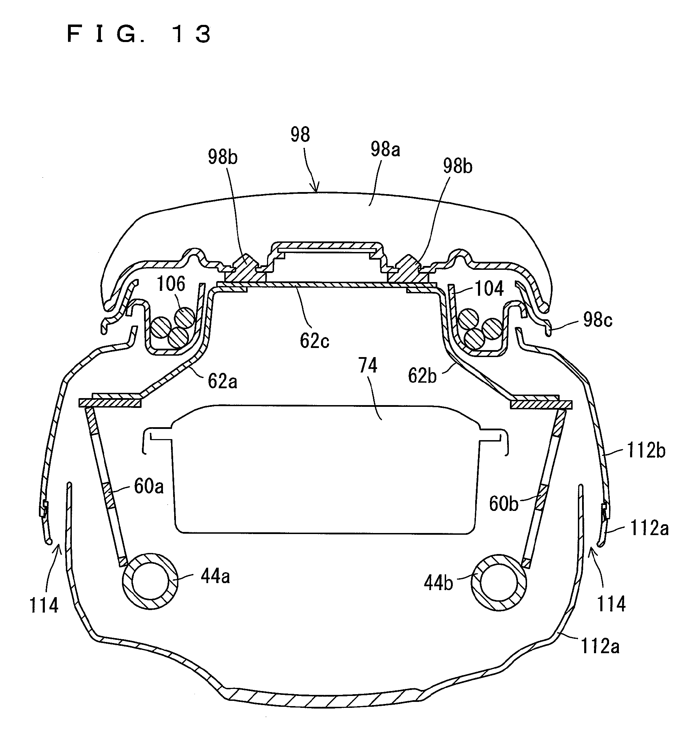

Referring to Fig. 1, Fig. 5 and Fig. 13, the seat 98 includes a seat main body 98a; a plurality of projections 98b provided in a lower surface of the seat main body 98a; and a cover 98c provided at a rear end portion of the seat main body 98a. Referring also to Fig. 4 and Fig. 5, the seat main body 98a has a fore end portion attached to a vicinity of a fore-end portion of a lower surface of the first seat supporting portion 48 via the connecting portion 100. Thus, the seat 98 is openable/closable (pivotable) around the connecting portion 100. When the seat 98 is closed, the projections 98b have their flat bottom surfaces contacting onto an upper surface of the connecting portion 62c in the second seat supporting portion 50, and keeps the seat 98 in position. Returning to Fig. 1, the suspension mounting portion 52 and the swing arm 34 are connected with each other by a suspension 102.

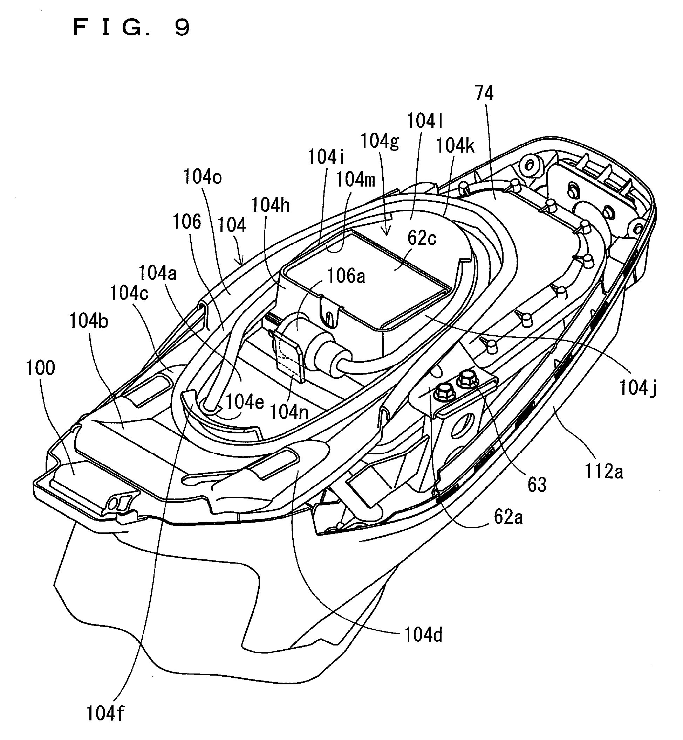

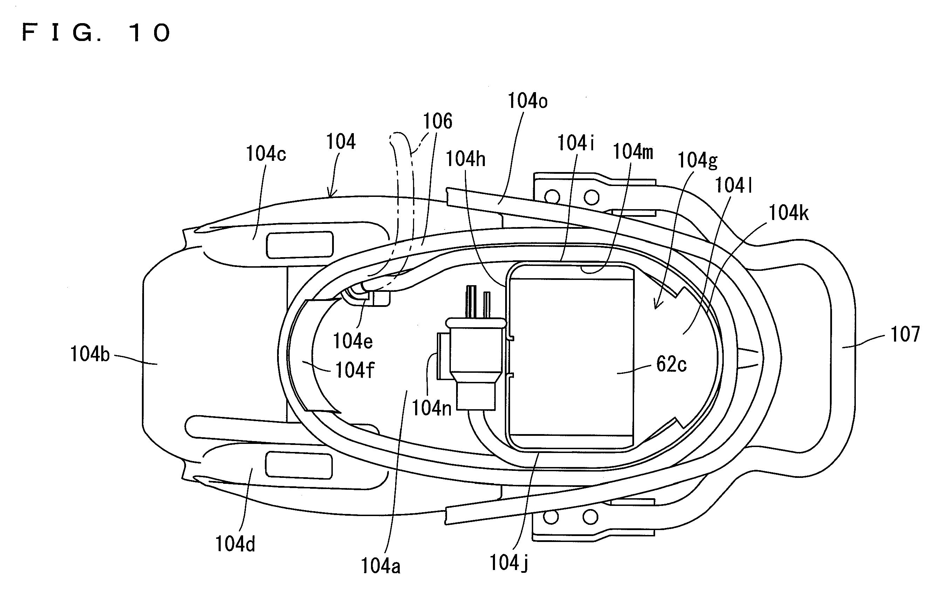

Referring then to Fig. 5, Fig. 9 and Fig. 10, an electric cord storage tray 104 is disposed above the first seat supporting portion 48, the second seat supporting portion 50 and the electric charger 74.

The electric cord storage tray 104 includes a tray main body 104a which is elongate in the fore-aft direction. The tray main body 104a has a fore end region formed as a forwardly uphill sloped portion 104b. The sloped portion 104b has two sides formed with a pair of fitting portions 104c, 104d extending in the fore-aft direction. The fitting portions 104c, 104d have a generally arc-shaped section for being fitted by the pipe 65 on respective sides of the motorcycle. Near the fitting portion 104c, a through-hole 104e is provided for a charging cord 106 to go out for connection to the electric charger 74. A slightly curved engager 104f is formed between the fitting portions 104c, 104d for the charging cord 106 to engage with. The tray main body 104a has a rear region formed as an upwardly projecting projection 104g. The projection 104g includes a front wall 104h; a left and a right side walls 104i, 104j; a rear wall 104k; and a ceiling plate 1041. The projection 104g is provided with a through-hole 104m at a position surrounded by the front wall 104h and the left-and-right side walls 104i, 104j, for insertion of the pair of upper portions 62a, 62b of the second seat supporting portion 50. When the pair of upper portions 62a, 62b are inserted into the through-hole 104m, the connecting portion 62c is exposed from the through-hole 104m. A nail-like clip tub 104n is erected in front of the front wall 104h. The front wall 104h and the clip tub 104n are spaced from each other so that a plug 106a of the charging cord 106 can be clipped and held in between. The tray main body 104a has its rear half region formed with a generally semielliptical outer wall 104o.

The charging cord 106 is stored on the above-described electric cord storage tray 104, and therefore the charging cord 106 is stored between the seat 98 and the electric charger 74. When being stored, the charging cord 106 is routed between the outer wall 104o and the projection 104g, being wound around along the side wall 104i, the rear wall 104k and the side wall 104j of the projection 104g, and then the engager 104f, so that the plug 106a is caught between the front wall 104h of the projection 104g and the clip tub 104n. A grip portion 107 is provided near the electric cord storage tray 104.

Referring to Fig. 1, a front panel 108 is attached to a front portion of the head pipe 14, covering the DC-DC converter 30. A front cover 110 is attached near the front frame 16. A rear lower cover 112a and a rear upper cover 112b engaged therewith are provided near the rear frame 18.

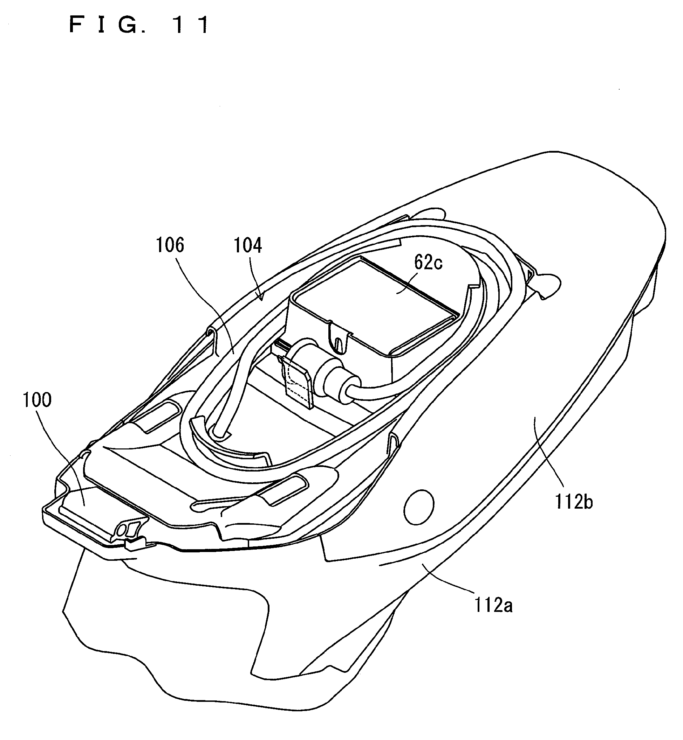

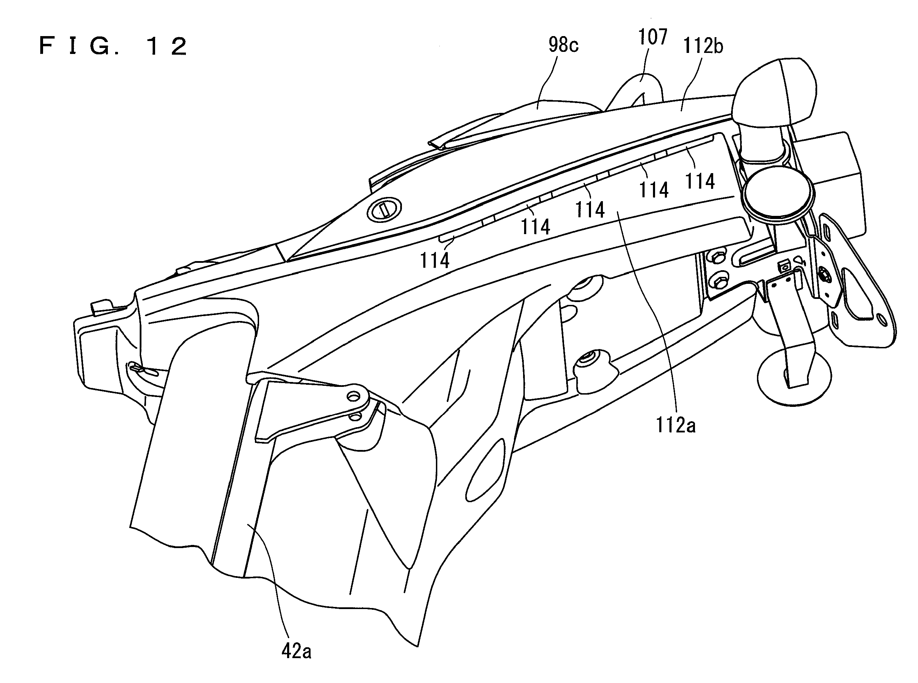

Referring to Fig. 11 through Fig. 13, along a left and a right side surfaces of the electric charger 74, a plurality (five on each side in the present embodiment) of heat dissipation openings 114 are provided in the rear lower cover 112a. Each heat dissipation opening 114 is an elongate hole for example.

According to the electric motorcycle 10 as described thus far, the first frame portion 42a (42b) is shorter than in conventional arrangement. The connecting spot P1 (P2) of the first frame portion 42a (42b) and the second frame portion 44a (44b) is at a lower position than the electric charger 74, and overlaps the battery 74 in a side view. Also, the second frame portion 44a (44b) is shorter than in conventional arrangements and extends below the electric charger 74 in a rearward direction. Therefore, a total length of the first frame portion 42a (42b) and the second frame portion 44a (44b) is shorter than in conventional arrangement. With the above-described arrangement, the electric charger 74 is supported by the electric charger supporting portion 46 which provides rectilinear connection between the two second frame portions 44a, 44b. As described, by using the rear frame 18 which is shorter than conventional ones, and by using the electric charger supporting portion 46 which provides rectilinear connection between the second frame portions 44a, 44b without brackets, it becomes possible to substantially decrease a length from a connecting spot X1 (X2) of the front frame 16 and the rear frame 18 (see Fig. 2 and Fig. 5), through the first frame portion 42a (42b), the second frame portion 44a (44b) and the electric charger supporting portion 46, to the electric charger 74; namely, a length of members (a route) from the connecting spot X1 (X2) of the front frame 16 and the rear frame 18 to the electric charger 74, in comparison with conventional arrangements. Therefore, it is possible to reduce vibration which is transmitted from the connecting spot X1 (X2) via the rear frame 18 to the electric charger 74. Also, by connecting the second frame portions 44a, 44b with each other using the second seat supporting portion 50, the arrangement provides rigid support to the second frame portions 44a, 44b, which also contributes to vibration reduction to the electric charger 74. Further, while the second seat supporting portion 50 connects the second frame portions 44a, 44b with each other, at least part of the second seat supporting portion 50 is located at a more forward position than the electric charger supporting portion 46. In this arrangement, load concentration onto rear ends of the second frame portions 44a, 44b is avoided. The arrangement reduces vibration of the second frame portions 44a, 44b, thereby reducing vibration to the electric charger 74. As has been described, a combination of a plurality of structural characteristics including a shortened rear frame 18; a rigidly supported pair of second frame portions 44a, 44b; a well-considered selection of a mounting position for the second seat supporting portion 50; etc. leads to reduced vibration to the electric charger 74.

The second seat supporting portion 50 connects the second frame portions 44a, 44b with each other while straddling the electric charger 74. In this arrangement, the second seat supporting portion 50 is not an obstacle in disposing the electric charger 74, and the electric charger 74 can be disposed at a forward position. As a result, the electric charger supporting portion 46, which supports the electric charger 74, can also be at a forward position. The arrangement can shorten the second frame portions 44a, 44b which are provided with the electric charger supporting portion 46. Therefore, it becomes possible to further shorten the length of members (the route) from the connecting spot X1 (X2) of the front frame 16 and the rear frame 18 to the electric charger 74 and hence, to further reduce vibration which is transmitted to the electric charger 74.

The upper portion 62a of the second seat supporting portion 50 is at least partially located on a more laterally inward side of the motorcycle than the lower portion 60a to which the upper portion 62a is connected. Likewise, the upper portion 62b is at least partially located on a more laterally inward side of the motorcycle than the lower portion 60b to which the upper portion 62b is connected. Therefore, when the charging cord 106 is laid on the outer sides of the upper portions 62a, 62b of the second seat supporting portion 50, the charging cord 106 can be stored smoothly without flipping.

Since the electric charger 74 is disposed so that its fore end is located at a more forward position than the rear end of the battery 68, the rear end of the electric charger 74 is located accordingly at a forward position. Therefore, the second frame portions 44a, 44b which support the electric charger 74 can be shortened for further reduction of vibration which is transmitted to the electric charger 74.

Since the first seat supporting portion 48 and the second seat supporting portion 50 are connected with each other by the connecting portions 64a, 64b, a more rigid support is provided to the second seat supporting portion 50 and also to the second frame portions 44a, 44b, leading to further reduction of vibration which is transmitted to the electric charger 74.

The charging cord 106 is stored between the seat 98 and the electric charger 74. In this case, it is possible to provide a large storage space for the charging cord 106. The space can easily accommodate a long (e.g. 2-meter) charging cord 106. This also provides increased convenience for the motorcycle rider to perform charging operations. Also, the arrangement allows the charging cord 106 to be stored at a small curvature, which extends life of the charging cord 106.

The battery 68 is disposed at a rearward tilt; the fore end F of the electric charger 74 is located at a lower height than the upper end (corner portion C1) of the battery 68; and the electric charger 74 is disposed at a forward tile. Therefore, it is possible to provide a large storage space for the charging cord 106 between the electric charger 74 and the seat 98.

In storage, the charging cord 106 is routed between the outer wall 104o and the projection 104g in the electric cord storage tray 104. The arrangement provides easy storage of the charging cord 106 without flipping.

Also, the charging cord 106 is wound around, while being fitted into the engager 104f and the rear wall 104k provided in the front and in the rear of the tray main body 104a respectively. The arrangement reduces flipping of the charging cord 106, making it easy to store.

Further, since the plug 106a is caught by the front wall 104h of the projection 104g and the clip tub 104n, flipping of the charging cord 106 is reduced, making it easy to store the charging cord 106.

The electric charger 74 and the charging cord 106 provided in the electric motorcycle 10 allow for charging from any standard power source available, and therefore increase convenience.

The insulation plate 56 placed between the electric charger 74 and the connecting portion 54 provides insulation between the electric charger 74 and the second frame portions 44a, 44b.

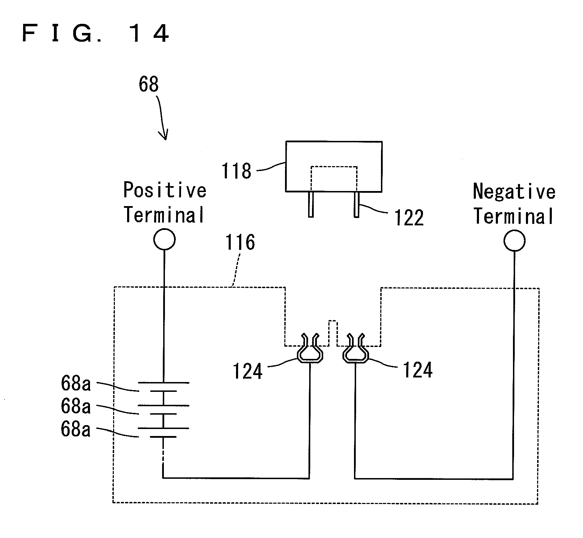

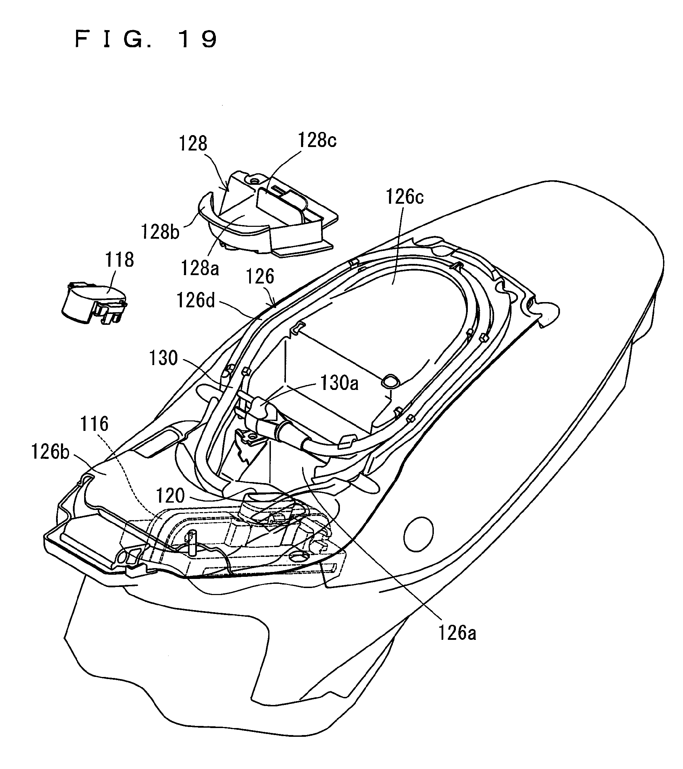

It should be noted here that with reference to Fig. 4, Fig. 5, Fig. 14 and Fig. 19, the battery 68 includes a battery main body 116 which stores a plurality of cells 68a; and a service plug 118 which is attachable to and detachable from the battery main body 116. The service plug 118 is used to establish a reliable, mechanical circuit breakage within the battery 68. The battery main body 116 has a plug receptacle 120 at a generally central region in its upper surface (see Fig. 19). As the service plug 118 is attached to the plug receptacle 120, a connection conductor 122 of the service plug 118 is inserted into sockets 124 of the battery main body 116, and circuit continuity is established within the battery 68. On the other hand, removing the service plug 118 from the plug receptacle 120 removes contact of the connection conductor 122 of the service plug 118 from the sockets 124 of the battery main body 116, breaking the circuit continuity within the battery 68.

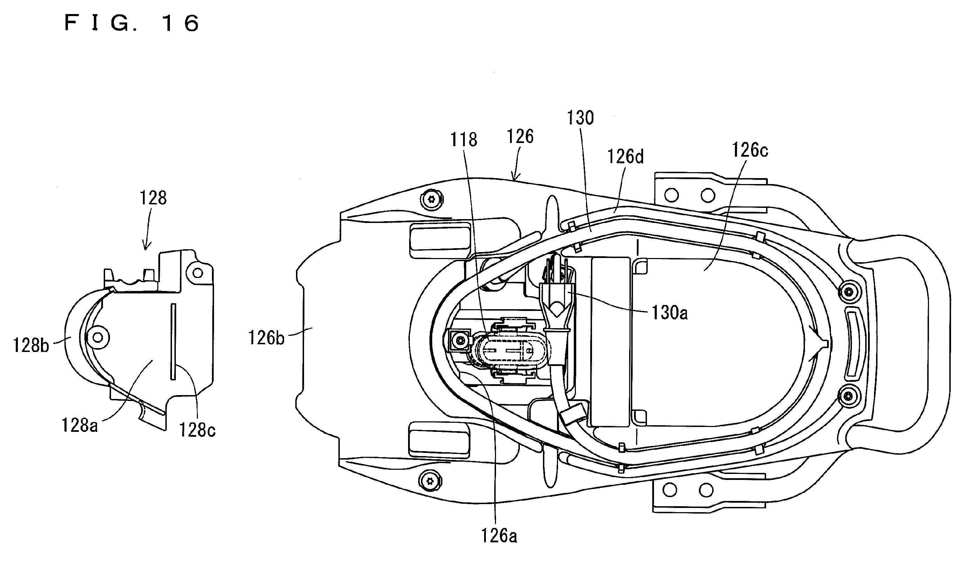

Referring also to Fig. 16, when the service plug 118 is attached to the plug receptacle 120 of the battery main body 116, the service plug 118 is at a generally central region of a motorcycle width (in the left-right direction) in a plan view; surrounded by the first seat supporting portion 48 from three directions; and is ahead of the electric charger 74 in a side view.

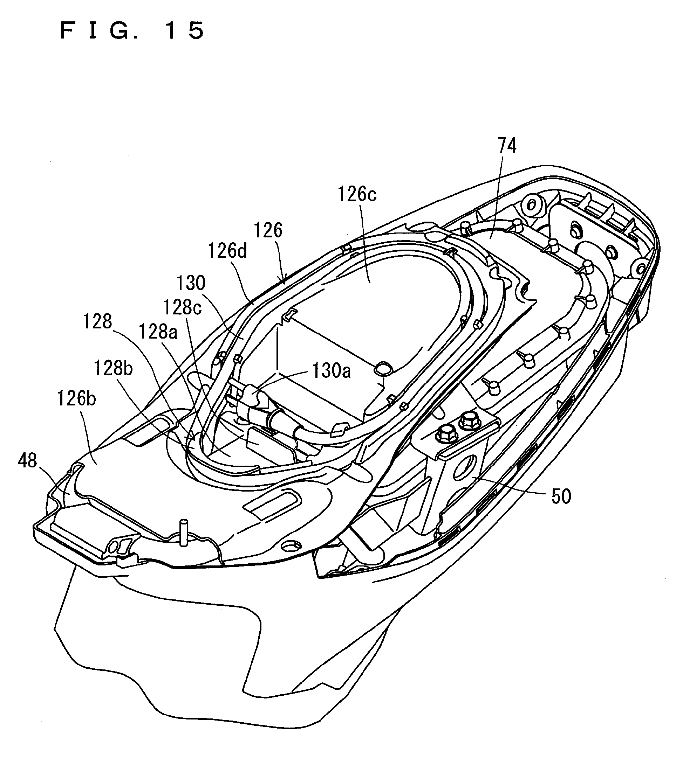

For improved access to the service plug 118 as described above, the electric cord storage tray 104 may be replaced by an electric cord storage tray 126 and a plug cover 128, for example, as shown in Fig. 15 and Fig. 16.

The electric cord storage tray 126 is disposed above the first seat supporting portion 48, the second seat supporting portion 50, the battery 68 and the electric charger 74. The electric cord storage tray 126 has a through-hole 126a at a position corresponding to the service plug 118 of the battery 68. The electric cord storage tray 126 includes a fore tray portion 126b which is provided above the first seat supporting portion 48; a rear tray portion 126c which is provided above the second seat supporting portion 50; and a generally semielliptical outer wall 126d which is provided along the rear tray portion 126c.

The plug cover 128 includes a cover main body 128a; an engager 128b erected from a fore portion of the cover main body 128a and curving sideways; and a platy portion 128c provided on the cover main body 128a. The plug cover 128 is attachable to and detachable from the electric cord storage tray 126, capable of closing the through-hole 126a, and can be disposed above the service plug 118 of the battery 68. When the plug cover 128 is attached, the plug cover 128 is positioned so that the engager 128b is at a fore position.

When storing a charging cord 130, the charging cord 130 is wound around the rear tray portion 126c and the engager 128b, and the plug 130a is stored between the fore tray portion 126b and the rear tray portion 126c.

When using the electric cord storage tray 126 and the plug cover 128 as described, access to the service plug 118 is made as follows:

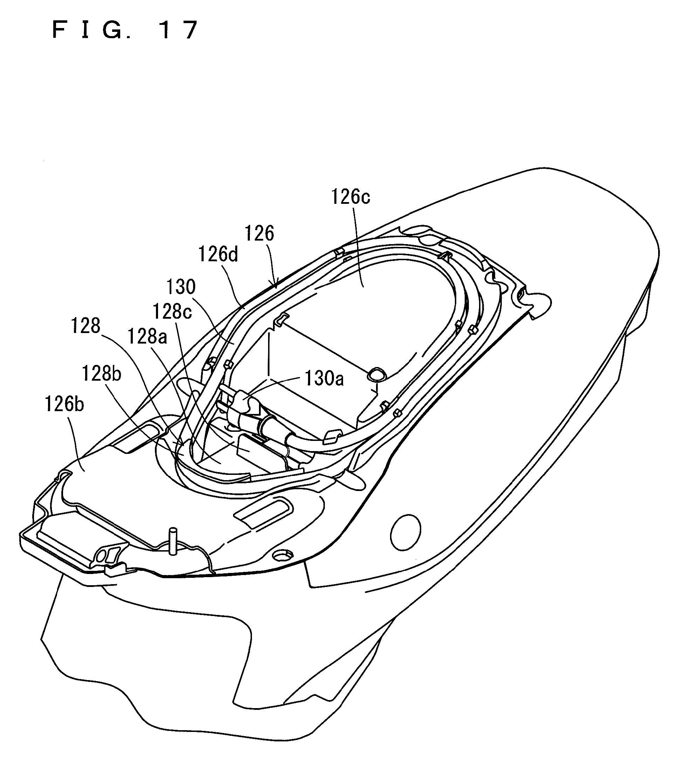

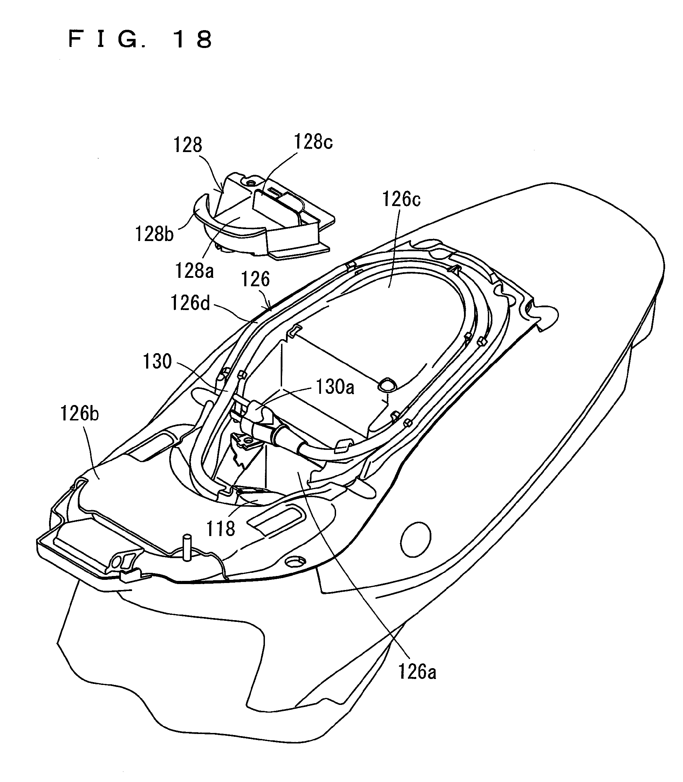

First, under a state shown in Fig. 17, the engager 128b of the plug cover 128 is pulled by hand to pull up and remove the plug cover 128. As shown in Fig. 18, the removal exposes the service plug 118 which is beneath the plug cover 128. Then, access can be made to the service plug 118 from above, for removal of the service plug 118 from the battery main body 116 as shown in Fig. 19.

By using the electric cord storage tray 126 and the plug cover 128 as described, the service plug 118 is stored without being exposed to the outside during normal use of the motorcycle. Meanwhile, the service plug 118 is easily accessible, being located at a generally central region of the motorcycle width (in the left-right direction) in a plan view, and in an upper surface of battery main body 116. Thus, simple removal of the plug cover 128 provides easy access from above to the service plug 118.

Also, the service plug 118 is at a generally central region in the upper surface of the rearward-tilted battery main body 116. Therefore, the battery main body 116 with the service plug 118 attached thereto does not give an additional height to the battery 68, so it is possible to provide a space above the battery 68.

Further, the plug receptacle 120 is below the seat 98. Therefore, even if the plug cover 128 is removed and the service plug 118 is removed from the battery main body 116, the plug receptacle 120 can be covered by simply flipping down the seat 98, and this prevents debris and other foreign objects from entering the battery main body 116 through the plug receptacle 120.

It should be noted here that in the embodiment described above, the pair of second frame portions 44a, 44b extend in an obliquely rearward and upward direction, at a smaller angle than the first frame portions 42a, 42b with respect to the horizontal direction. However, the present invention is not limited to these. The pair of second frame portions 44a, 44b should extend at least in a rearward direction; namely, they may extend right in the rearward direction, for example.

Also, in the embodiment described above, the first frame portion 42a and the second frame portion 44a are a single frame which is curved into a generally V-shaped look. However, the present invention is not limited to these. The first frame portion 42a and the second frame portion 44a may be formed by bending a single frame. In this case, the bent portion represents the connecting spot P1 of the first frame portion 42a and the second frame portion 44a. Also, the first frame portion 42a and the second frame portion 44a may be formed as individual frames and then connected with each other by welding for example. The same applies to the first frame portion 42b and the second frame portion 44b.

In the embodiment described above, the pair of upper portions 62a, 62b of the second sheet supporting portion 50 increasingly come closer to each other at their higher positions. However, the present invention is not limited to this. It is preferable that the upper portion 62a is at least partially located on a more laterally inward side of the motorcycle than the lower portion 60a to which the upper portion 62a is connected. Likewise, it is preferable that the upper portion 62b is at least partially located on a more laterally inward side of the motorcycle than the lower portion 60b to which the upper portion 62b is connected.

It is preferable that the foot rests 32 are disposed at a position which is more forward and lower than part of the seat 98.

The electric charger supporting portion 46 may only be connected with one of the second frame portions 44a, 44b, to make a so-called cantilever structure.

It is preferable that the second seat supporting portion 50 has at least part of it located at a more forward position than the electric charger supporting portion 46.

The present invention being thus far described in terms of preferred embodiments, it is obvious that these may be varied in many ways within the scope and the spirit of the present invention. The scope of the present invention is only limited by the accompanied claims.

### LEGEND

- 10: Electric motorcycle
- 12: Motorcycle body frame
- 16: Front frame
- 18: Rear frame
- 32: Foot rest
- 34: Rear arm
- 36: Electric motor
- 38: Rear wheel
- 42a, 42b: First frame portions
- 44a, 44b: Second frame portions
- 46: Electric charger supporting portion
- 48: First seat supporting portion
- 50: Second seat supporting portion
- 52: Suspension mounting portion
- 54, 62c, 64a, 64b: Connecting portions
- 56: Insulation plate
- 60a, 60b: Lower portions
- 62a, 62b: Upper portions
- 68: Battery
- 70: Battery holder
- 72: Hold-down portion
- 74: Electric charger
- 98: Seat
- 104, 126: Electric cord storage trays
- 106, 130: Charging cords
- 112a: Rear upper cover
- 112b: Rear lower cover
- 114: Heat dissipation opening
- 116: Battery main body
- 118: Service plug
- 120: Plug receptacle
- 126a: Through-hole
- 128: Plug cover
- C1: Corner portion (upper end) of battery
- C2: Corner portion (rear end) of battery
- F: Fore end of electric charger
- P1, P2: Connecting spot of first frame portion and second frame portion
- X1, X2: Connecting spot of front frame and rear frame

## Claims

1. An electric motorcycle comprising:
a motorcycle body frame including a rear frame;
a seat supported by the rear frame, for a rider to sit on;
a foot rest disposed at a more forward and lower position than part of the seat and supported by the motorcycle body frame;
a rear arm having a fore end portion connected with the motorcycle body frame;
an electric motor provided in the rear arm;
a rear wheel supported at a rear end portion of the rear arm and driven by the electric motor;
a battery for supplying electric power to the electric motor;
an electric charger disposed below the seat, above the rear wheel for charging the battery; and
a charging cord connected with the electric charger and stored between the seat and the electric charger;
wherein the battery is disposed at a rearward tilt, the electric charger having its fore end located at a lower position than an upper end of the battery, the electric charger being disposed at a forward tilt.

2. The electric motorcycle according to Claim 1, wherein the fore end of the electric charger is located at a more forward position than a rear end of the battery.

3. The electric motorcycle according to Claim 1 or 2, wherein the charging cord includes a plug located above the battery when the charging cord is stored.

4. The electric motorcycle according to one of Claims 1 to 3, wherein the charging cord is wound around so that a fore edge portion of the charging cord is located at a lower position than a rear edge portion of the charging cord, when the charging cord is stored.

5. The electric motorcycle according to Claim 4, wherein the charging cord is wound around so that the fore edge portion of the charging cord is located at a lower position than an upper end of the electric charger, when the charging cord is stored.

6. The electric motorcycle according to Claim 4, wherein the charging cord is wound around so that the rear edge portion of the charging cord is located at a more forward position than an upper end of the electric charger, the fore edge portion of the charging cord being located at a more rearward position than the upper end of the battery, when the charging cord is stored.
